# EUROPÄISCHE PATENTSCHRIFT

(11) **EP 0 529 371 B1**
(45) Veröffentlichungstag und Bekanntmachung des Hinweises auf die Patenterteilung: **06.11.1996**
(21) Anmeldenummer: 92113474.8
(22) Anmeldetag: 07.08.1992
(51) Int. Cl.: D03D 1/02, B60R 21/16

(54) **Gewebe zur Herstellung eines Airbags**
Fabric for the manufacture of airbags
Tissu pour la fabrication d'un coussin pneumatique

(30) Priorität: 16.08.1991 DE 4127185
(43) Veröffentlichungstag der Anmeldung: 03.03.1993
(73) Patentinhaber: UTT Technische Textilien GmbH & Co.KG, 86381 Krumbach (DE)
(72) Erfinder: Keller, Siegfried, W-8908 Krumbach (DE); Schmollinger, Jörg Martin, W-7900 Ulm (DE); Jauernig, Peter, W-7533 Tiefenbronn (DE)
(74) Vertreter: Füchsle, Klaus, Dipl.-Ing.

(56) Entgegenhaltungen:
- EP-A- 0 442 373
- EP-A- 0 454 213
- DE-A- 2 164 627
- DE-A- 4 009 611
- FR-A- 1 459 651
- FR-A- 2 091 283

## Beschreibung

Die Erfindung betrifft ein unbeschichtetes Gewebe aus synthetischem Garn nach dem Oberbegriff des Patentanspruchs 1.

Ein derartiges Gewebe ist aus der DE-OS 21 64 627 bekannt. Bei diesem bekannten Gewebe soll eine erhöhte Porosität vermieden werden, weshalb das Gewebe nach einer Längung einer sofortigen Rückbildung von mindestens 70% unterliegt. Der aus dem vorbekannten Gewebe hergestellte Airbag soll sich dabei möglichst gleichmäßig und nicht plötzlich und vollständig entleeren.

Ein Gewebe nach dem Oberbegriff des Patentanspruchs 1 ist ferner aus der FR 2 091 283 bekannt und dient dort ebenfalls zur Herstellung eines Airbags.

Zur Herstellung von Airbags zum Schutz von Fahrzeuginsassen wurden beim Stand der Technik vorwiegend beschichtete Gewebe eingesetzt. Jedoch hat sich gezeigt, daß beschichtete Gewebe bei der Herstellung von Airbags bedeutende Nachteile aufweisen. Aus diesem Grund kamen in jüngerer Zeit unbeschichtete Gewebe für die Herstellung von Airbags zur Anwendung, die ein leichteres Gewicht aufweisen als die beschichteten Gewebe.

Bei Auslösen der Airbag-Funktion wird der Airbag üblicherweise in Millisekunden aufgeblasen, so daß der Fahrzeuginsasse lediglich gegen den Airbag prallt, wodurch eine Verletzungsgefahr verringert ist. Das Aufblasen des Airbags erfolgt hierbei durch einen Gasgenerator, der den Airbag mit dem nötigen Gasdruck füllt. Es hat sich jedoch bei der Verwendung von unbeschichtetem Gewebe herausgestellt, daß die von dem Gasgenerator erzeugten Schmutzpartikel die Gasdurchlässigkeit des Gewebes negativ beeinflußen. Da die Maschen des Gewebes durch diese Schmutzpartikel in unerwünschter Weise verstopft werden, kann das Gas nicht ordnungsgemäß durch die Gewebemaschen aus dem Airbag entweichen, was sich auf dessen Aufpralleigenschaften nachteilig auswirkt.

Das der Erfindung zugrundeliegende Problem besteht somit darin, ein unbeschichtetes Gewebe für einen Airbag zur Verfügung zu stellen, der im Moment des Aufpralls des Fahrzeuginsassen verbesserte Aufpralleigenschaften aufweist.

Diese Aufgabe wird durch einen Airbag aus einem Gewebe mit den Merkmalen des Patentanspruchs 1 gelöst.

Der Begriff Höchstzugkraftdehnung wird dabei im Sinne der DIN 53 815 verstanden.

Durch die Anwendung des erfindungsgemäßen Gewebes wird der Airbag zunächst bis auf einen vorbestimmten Druck aufgeblasen, bei dem die Höchstzugkraftdehnung der dehnungsarmen Materialkomponente erreicht ist. Bei Überschreiten dieses Druckes reißt die in dem Gewebe enthaltene dehnungsarme Materialkomponente mit geringer Höchstzugkraftdehnung schlagartig, wodurch sich das übrige Gewebe mehr dehnen kann und luftdurchlässiger wird. Hierdurch wird trotz Vorhandenseins von Schmutzpartikeln im Inneren des Airbags eine gleichmäßige Gasdurchlässigkeit des Gewebes erzielt.

Die in dem Gewebe des Airbags enthaltene dehnungsarme Materialkomponente kann aus Garnfäden bestehen, die in das übrige Gewebe eingearbeitet sind. Die dehnungsarme Materialkomponente kann jedoch auch in die dehnungsintensiven Garnfäden des Gewebes eingearbeitet sein.

Als eine dehnungsintensive Materialkomponente kann vorteilhafterweise ein synthetisches Garn mit einer Höchstzugkraftdehnung von mehr als 10% verwendet werden, wie beispielsweise Polyamid oder Polyester, wie zum Beispiel dtex 470 Nylon glzd., h'fest, Type 444 HRST der Fa. Akzo.

Die dehnungsarme Materialkomponente kann aus einem synthetischen Garn mit einer Höchstzugkraftdehnung von weniger als 10% bestehen, z.B. aus Kevlar (eingetragenes Warenzeichen der Fa. Du Pont) oder Twaron (eingetragenes Warenzeichen der Fa. Akzo).

Vorteilhafterweise werden für das erfindungsgemäße Gewebe Garne in einem Titerbereich von dtex 40 bis dtex 1000 eingesetzt. Hierbei können die eingesetzten Garne gedreht oder ungedreht sein.

Für das erfindungsgemäße Gewebe können je nach Anwendung, d.h. nach gewünschter Gewebefestigkeit und Gewebeluftdurchlässigkeit die verschiedensten Bindungen zum Einsatz kommen. Als vorteilhaft haben sich die Leinwandbindung, Rips, Panama, sämtliche Köpervarianten, Kreuzköpervarianten und Atlasvarianten erwiesen. Besonders vorteilhaft können dabei die Kreuzköperbindung sowie die Leinwandbindung sein, da in diesem Fall die rechte und die linke Gewebeseite gleich sind.

Durch das Mischungsverhältnis der dehnungsarmen Materialkomponente zu dem übrigen dehnungsintensiven Gewebe, d.h. dem Mischungsverhältnis von dehnungsintensivem Garn zu dehnungsarmem Garn kann genau dosiert werden, bei welcher Zugkraft die dehnungsarme Materialkomponente, d.h. die eingebauten Sollbruchfäden reißen soll. Hierbei sind besonders vorteilhafte Mischungsverhältnisse der Garnfäden der dehnungsarmen Materialkomponente zu den Garnfäden des übrigen dehnungsintensiven Gewebes je nach Fadendichte und Garntiter 1:1 bis 1:80.

Ein Mischen von dehnungsarmen und dehnungsintensiven Komponenten kann durch Einsatz unterschiedlicher Fäden erfolgen, wobei jedoch auch der Einsatz eines Garnes mit dehnungsarmen und dehnungsintensiven Komponenten vorteilhaft sein kann.

Die erfindungsgemäß hergestellten Gewebe können roh oder ausgewaschen und wärmebehandelt zum Einsatz kommen.

Nachfolgend wird ein vorteilhaftes Ausführungsbeispiel der vorliegenden Erfindung beschrieben. Es wurde ein Gewebe mit folgenden Daten hergestellt:
- Bindung:: Kreuzköper 2/2
- Fadendichte:: 21 Kettfäden pro cm
21 Schußfäden pro cm
- Schußfolge:: 3 dtex 470 PA h' fest
1 dtex 220 Kevlar 49

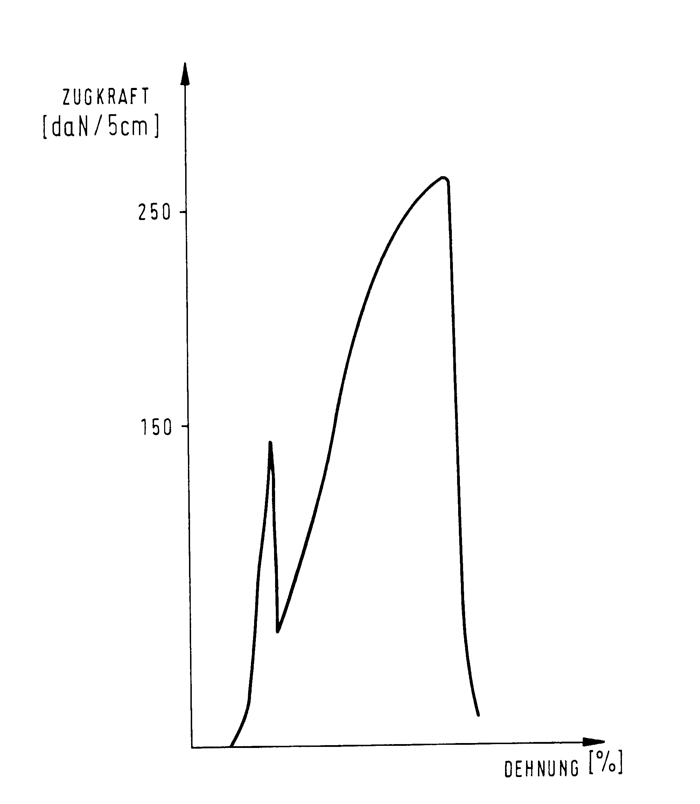

Dieses Gewebe wurde einer Zugprüfung unterworfen, deren Ergebnisse in der Figur schematisch dargestellt sind. Wie gut zu erkennen ist, zeigt das Zugkraft-Längenänderungsdiagramm zwei deutliche Stufen. Hierbei ist die erste Stufe bei einer Höchstzugkraft von 147,0 daN/5 cm erreicht, was einer Höchstzugkraftdehnung von 5% entspricht. Die zweite Stufe ist bei einem Wert von 264,4 daN/5 cm erreicht, was einer Höchstzugkraftdehnung von 27,2% entspricht.

Wie aus der Figur gut zu sehen ist, dehnt sich nach Erreichen der ersten Stufe, d.h. nach Brechen der eingebauten Sollbruchfäden der dehnungsarmen Materialkomponente das Gewebe schlagartig weiter aus. Hierdurch wird beim Einsatz des Airbags die Gasdurchlässigkeit des Gewebes erhöht, was die Eigenschaften des Airbags deutlich verbessert.

## Patentansprüche

1. Unbeschichtetes Gewebe aus synthetischem Garn zur Herstellung eines Airbags, das eine dehnungsintensive und eine dehnungsarme Materialkomponente enthält,
dadurch **gekennzeichnet,** daß
die dehnungsarme Materialkomponente eine Höchstzugkraftdehnung von weniger als 10% aufweist und die dehnungsintensive Materialkomponente eine Höchstzugkraftdehnung von mehr als 10% aufweist.

2. Gewebe nach Anspruch 1,
dadurch **gekennzeichnet,** daß
das Gewebe aus Garnfäden der dehnungsintensiven Materialkomponente besteht, in das Garnfäden eingearbeitet sind, die aus der dehnungsarmen Materialkomponente bestehen.

3. Gewebe nach Anspruch 1,
dadurch **gekennzeichnet,** daß
die dehnungsarme Materialkomponente in Garnfäden des Gewebes eingearbeitet ist, die aus der dehnungsintensiven Materialkomponente bestehen.

4. Gewebe nach Anspruch 2,
dadurch **gekennzeichnet,** daß
die Garnfäden des Gewebes einen Titerbereich von dtex 40 bis dtex 1000 aufweisen.

5. Gewebe nach Anspruch 2,
dadurch **gekennzeichnet,** daß
das Mischungsverhältnis der Garnfäden der dehnungsarmen Materialkomponente zu den Garnfäden der dehnungsintensiven Materialkomponente 1:1 bis 1:80 beträgt.

6. Gewebe nach Anspruch 1,
dadurch **gekennzeichnet**, daß
das Gewebe zwischen 8 und 80 Fäden/cm in Kette und Schuß aufweist.

7. Gewebe nach Anspruch 1,
dadurch **gekennzeichnet**, daß
das Gewebe 21 Kettfäden/cm aus dtex 470, 21 Schußfäden/cm aus dtex 220 in Kreuzköper 2/2 aufweist.

8. Gewebe nach Anspruch 1,
dadurch **gekennzeichnet**, daß das Gewebe in Kreuzköperbindung oder in Leinwandbindung erstellt ist.

9. Gewebe nach Anspruch 1,
dadurch **gekennzeichnet**, daß das Gewebe in einer der folgenden Bindungen erstellt ist: Rips, Panama, Köper oder Atlas.

10. Airbag aus einem Gewebe nach einem der vorhergehenden Ansprüche.

## Claims

1. Uncoated textile fabric made of synthetic yarn for the production of an airbag which contains a material component of high extensibility and of low extensibility, characterised in that the material component of low extensibility exhibits a maximum tensile force extension of less than 10% and the material component of high extensibility exhibits a maximum tensile force extension of more than 10%.

2. Textile fabric according to Claim 1, characterised in that the textile fabric consists of yarn threads of the material component of high extensibility, into which yarn threads are worked which consist of the material component of low extensibility.

3. Textile fabric according to Claim 1, characterised in that the material component of low extensibility is worked into yarn threads of the textile fabric which consist of the material component of high extensibility.

4. Textile fabric according to Claim 2, characterised in that the yarn threads of the textile fabric exhibit a titre range of dtex 40 to dtex 1000.

5. Textile fabric according to Claim 2, characterised in that the mixing ratio of the yarn threads of the material component of low extensibility to the yarn threads of the material component of high extensibility amounts to 1:1 to 1:80.

6. Textile fabric according to Claim 1, characterised in that the textile fabric has between 8 and 80 threads/cm in warp and weft.

7. Textile fabric according to Claim 1, characterised in that the textile fabric has 21 warp threads/cm of dtex 470, 21 weft threads/cm of dtex 220 in 2/2 cross twill.

8. Textile fabric according to Claim 1, characterised in that the textile fabric is constructed in cross twill weave or in linen weave.

9. Textile fabric according to Claim 1, characterised in that the textile fabric is constructed in one of the following weaves: reps, twill or sateen.

10. Airbag made of a textile fabric according to one of the preceding claims.

## Revendications

1. Tissu non revêtu en filament synthétique, destiné à la fabrication d'un coussin gonflable de sécurité ("airbag") qui renferme un composant de matériau à fort allongement et un composant de matériau à faible allongement, caractérisé en ce que le composant de matériau à faible allongement présente un allongement sous force de traction maximale de moins de 10%, et le composant de matériau à fort allongement présente un allongement sous force de traction maximale de plus de 10%.

2. Tissu selon la revendication 1, caractérisé en ce que le tissu est constitué de fils de filaments du composant de matériau à fort allongement, dans lesquels sont incorporés des fils de filaments constitués du composant de matériau à faible allongement.

3. Tissu selon la revendication 1, caractérisé en ce que le composant de matériau à faible allongement est incorporé dans des fils de filaments du tissu, qui sont constitués du composant de matériau à fort allongement.

4. Tissu selon la revendication 2, caractérisé en ce que les fils de filaments du tissu présentent une plage de titre allant de dtex 40 à dtex 1000.

5. Tissu selon la revendication 2, caractérisé en ce que le rapport de mélange des fils de filaments du composant de matériau à faible allongement aux fils de filaments du composant de matériau à fort allongement vaut 1:1 à 1:80.

6. Tissu selon la revendication 1, caractérisé en ce que le tissu présente entre 8 et 80 fils/cm en chaîne et en trame.

7. Tissu selon la revendication 1, caractérisé en ce que le tissu présente 21 fils de chaîne/cm de dtex 470 et 21 fils de trame/cm de dtex 220, selon une armure croisée 2/2.

8. Tissu selon la revendication 1, caractérisé en ce que le tissu est réalisé en armure croisée ou en armure-toile.

9. Tissu selon la revendication 1, caractérisé en ce que le tissu est réalisé dans l'une des armures suivantes: reps, Panama, sergé ou satin.

10. Coussin gonflable de sécurité réalisé en un tissu selon l'une des revendications précédentes.
